# EUROPEAN PATENT SPECIFICATION

(11) **EP 1 875 748 B1**
(45) Date of publication and mention of the grant of the patent: **07.11.2012**
(21) Application number: 05744779.9
(22) Date of filing: 27.04.2005
(51) Int. Cl.: H04W 4/00, H04L 29/06, H04L 12/28

(54) **Service routing decision entity**
Dienst-Routing-Entscheidungsentität
Entité de décision d'acheminement de service

(43) Date of publication of application: 09.01.2008
(73) Proprietor: Telefonaktiebolaget LM Ericsson (publ), 164 83 Stockholm (SE)
(72) Inventor: KELLER, Ralf, 52146 Würselen (DE); WITZEL, Andreas, 52134 Herzogenrath (DE)
(74) Representative: von Zmuda-Trzebiatowski, Margarethe
(86) International application number: PCT/EP2005/004515
(87) International publication number: WO 2006/114120

(56) References cited:
- WO-A-01/35585
- WO-A-2005/081491
- WO-A-2005/104591
- US-A1- 2003 027 569
- US-A1- 2004 249 887
- US-A1- 2004 259 549
- US-A1- 2005 025 047
- US-B1- 6 317 609

## Description

### [Field of the invention]

The present application relates to a service routing decision entity and a service routing decision method for a system that comprises a circuit switched subsystem, an Internet Protocol Multimedia System (IMS) subsystem and at least one mobile terminal suitable for communication with the circuit switched subsystem and the IMS subsystem.

### [Background of the invention]

In the field of mobile communication, circuit switched networks have traditionally been used, as e.g. in the GSM system. GSM has been steadily updated, and also more recently developed mobile communication systems such as WCDMA and CDMA (in accordance with the third generation partnership project 3GPP) are also based on circuit switching.

Furthermore, communication systems are presently being developed and used that are based upon the Internet Protocol (IP), namely the so-called IP Multimedia System (IMS). IMS is also standardised under the third generation partnership project. IMS based networks are being used to provide a plurality of services to the user of a mobile terminal, such as simple messaging or presence services, but more increasingly also telephony services such as Voice-over-IP (VoIP). As an example, it is presently already possible to provide an IMS based telephony service using WLAN radio access technology.

This leads to a number of problems for the providing of services to a mobile terminal that is capable of interacting with a circuit switched subsystem of an overall communication system, and with an IMS subsystem of such an overall communication system, if the circuit switched subsystem and the IMS subsystem have an at least partially overlapping sets of services to offer. This will be explained in more detail with respect to an example, in which it is envisioned to have a circuit switched subsystem and an IMS subsystem that both provide a voice call service. In other words, the voice call service is an overlapping service between the two subsystems. In the event that the mobile terminal is located such that it can only communicate with one of the subsystems, the providing of a voice call service for originating calls is straight forward, i.e. the user must use the subsystem that is available. On the other hand, for terminating calls problems can occur. For example, when moving, the mobile terminal can lose radio coverage for one or both of the two subsystems, possibly without having had time to appropriately update the networks. In this case requests for terminating calls to the mobile terminal will still try to reach the subscriber through one subsystem, although he may have moved and is actually reachable via the other subsystem.

If the mobile terminal is located such that it can receive service from both the circuit switched subsystem and the IMS subsystem, there is the problem that the user or control nodes in the respective subsystems will not be able to efficiently route the desired service.

US 2004/0249887 A1 describes a method of setting up a session between peer user terminals in a communication system that comprises a circuit switched domain and an IMS. The IMS comprises a SIP server that can initiate the establishment of conversational bearers over the circuit switched domain. The SIP server interacts with a gateway server that provides Interworking between the circuit switched session and the packet switched session. Thereby a call-control protocol used for end-to-end packet switched sessions can also be used for setting up a circuit switched session.

US 2005/0025047 A1 describes a method and system for establishing a circuit switched bearer using a signalling protocol for packet switched communication, e.g. the SIP protocol.

US 2003/0027569 A1 describes a communication system for providing roaming between an IMS and a circuit switched domain. The circuit switched domain comprises a so called Interworking Mobile Switching Center (iMSC). The iMSC translates circuit switched domain features to SIP, thereby allowing for Interworking between circuit-switched and packet-switched domains for provision of features and services while roaming between different kinds of home and serving systems.

WO 01/35585 A1 describes a method and apparatus for selective network access. The document is concerned with establishing a connection between an end device (such as a cellular phone, a wireless computer, a printer, or an intelligent household appliance) and an IP network (like the Internet) via a plurality of access network terminating devices (such as a cellular access device, a LAN access device, or a fixed access mechanism).

### [Object of the present invention]

The object of the present invention is to provide a solution to the above-mentioned problems that occur with respect to a circuit switched subsystem and an IMS subsystem that provide overlapping services.

### [Summary of the invention]

The above object is solved by the subject-matter of the independent claims of the present application. Advantageous embodiments are described in the dependent claims.

In accordance with the present invention, a service routing decision entity is provided, which is arranged for making a routing decision associated with a given service (e.g. a voice call) involving a mobile terminal (e.g. an originating or a terminating call) with respect to routing the given service via one or both of the circuit switched subsystem and the IMS subsystem, based on predetermined decision information.

A service within the meaning of the present specification and claims is any functionality of a subsystem offered to a user of said subsystem. This definition of service corresponds to that given in 3GPP TR 21.905. Examples of services are the placing of a call (e.g. a voice call, a video call, etc.) or the communication of a message (a text message, a voice message, a video message, etc.).

An entity within the meaning of the present specification and claims is any arrangement suitable for providing a given function, where the entity can be a unit located in one node or terminal of a network, or it can be a system spread out over different nodes and terminals. The entity can be embodied as hardware, software or any suitable combination of hardware and software.

The decision information used by the service routing decision entity can be chosen in any suitable or desirable way. It can e.g. be a reachability information associated with the reachability of the mobile terminal and/or a preference information associated with a preference set by an operator or a user, a subscription information, a time information associated with a time of day, a load information relating to the load of a subsystem, a coverage information associated with the coverage of a subsystem, an availability information, a service type information, a service use information, a connection information associated with active connections, and a capability information associated with the capability of the mobile terminal or one or more nodes of the subsystems.

Due to the service routing decision entity, the previously described problems of the prior art are solved. Namely, the service routing decision entity is capable of automatically deciding how to route a given service, whereby an efficient and desired use of the subsystems can be obtained.

### [Brief description of Figures]

The present invention will now be described in more detail based on specific embodiments and with reference to the enclosed figures where
- Fig. 1: gives a schematic overview of an embodiment ;
- Fig. 2: gives a schematic overview of a circuit switched subsystem and an IMS subsystem in which the present invention can be embodied in a number of ways;
- Fig. 3: shows a flow chart of a basic service routing decision method
- Fig. 4: shows a flow chart of another method embodiment of the present invention;
- Fig. 5: shows a flow chart of a further method embodiment of the present invention; and
- Fig. 6: shows yet another flow chart of a method embodiment of the present invention.

### [Detailed description of embodiments]

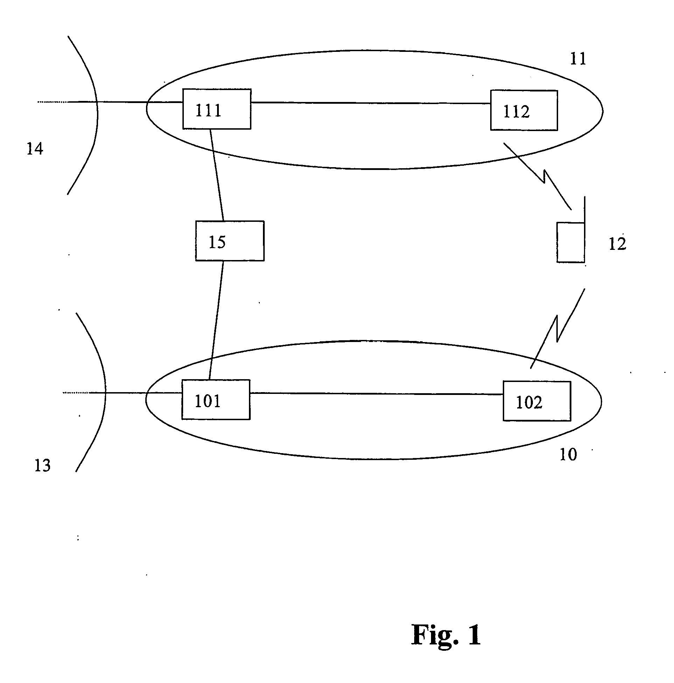

Fig. 1 shows a schematic representation of an embodiment of communication system. Reference numeral 10 refers to an Internet Protocol Multimedia system (IMS) subsystem, and reference numeral 11 describes a circuit switched subsystem. A mobile terminal 12 is suitable for communication with the circuit switched subsystem 11 and the IMS subsystem 10. Reference numerals 13 and 14 relate to further communication networks or subsystems with which the subsystems 10 and 11 can interact. Networks 13 and 14 could e.g. be a public switched telephone network (PSTN), a computer network such as the Internet, etc. The connections shown in Fig. 1 are only an example, and the subsystems 10 and 11 could both be connected to each of the networks 13 and 14, and it is also possible that there are more or less further networks than the shown networks 13 and 14.

In Fig. 1 reference numeral 101 relates to a control node in the IMS subsystem, said control node being suitable for controlling the provision of a service to the mobile terminal 12. Reference numeral 102 describes an access node via which the mobile terminal 12 accesses the IMS subsystem 10.

Reference numeral 111 similarly relates to a control node of the circuit switched subsystem 11, suitable for controlling and managing service provision of the circuit switched subsystem 11 to the mobile terminal 12. Reference numeral 112 describes an access node via which the mobile terminal 12 can access the circuit switched subsystem 11.

It is noted that the representation in Fig. 1 is only schematic, and that the subsystems will generally comprise a larger number of nodes, e.g. intermediate nodes and gateway nodes, which are not shown for simplicity. Furthermore, it is possible that specific access networks are arranged between the mobile terminal 12 and the subsystems 10 and 11. The figure shows one mobile station 12 for the purpose of simplicity and clarity, but it should be understood that an actual communication system will be arranged to provide service to a much larger number of mobile stations.

The circuit switched subsystem 11 and the IMS subsystem 10 are such that the circuit switched subsystem provides a first set of services and the IMS subsystem provides a second set of services. The first and second set of services are at least partially overlapping, which in other word means that the two subsystems 10 and 11 offer at least some of the same services to the mobile terminal 12. For example, it is possible that both subsystems provide the service of establishing voice calls, where e.g. the circuit switched subsystem could do this based on the GSM standard, whereas the IMS subsystem could do this based on the principles of Voice-over-IP. Naturally, the two subsystems could also have other or more services in common. Other services could be video calls or video streaming (point-to-point, point-to-multipoint or broadcasting), messaging (text, voice or video), etc.

In accordance with the present invention, a service routing decision entity 15 is provided. The service routing decision entity is arranged for making a routing decision associated with a given service involving the mobile terminal 12 with respect to routing the given service via one or both of the circuit switched subsystem 11 and the Internet Protocol Multimedia System subsystem 10, based on predetermined decision information.

As a consequence, when a situation occurs in which a service is to be routed to the terminal 12, e.g. after having received a request for such a service, such as a terminating or originating call request, the service routing decision entity 15 considers predetermined decision information, e.g. relating to the reachability of the mobile terminal 12, the capabilities of the subsystems, etc., in order to then make a decision through which of the subsystems to route the service and to send a corresponding decision signal to the subsystems. It is noted that the present invention also envisions the possibility of routing one service through both subsystems, if this is desirable and/or feasible. For example, if both subsystems are capable of video streaming, and the mobile terminal is reachable via both subsystems, there can be situations in which it is preferred to provide the video stream via both subsystems, in order to achieve maximum reliability.

Due to the service routing decision entity, the previously described problems of the prior art are solved. Namely, the service routing decision entity is capable of automatically deciding how to route a given service, whereby an efficient and desired use of the subsystems can be obtained.

The decision information used by the service routing decision entity can be chosen in any suitable or desirable way. For example, it can be reachability information associated with a reachability of the mobile terminal 12 via one or both of the circuit switched subsystem 11 and the IMS subsystem 10. The reachability information can e.g. simply be an indication that the mobile terminal is within the range of a subsystem and capable of communicating, e.g. in an idle waiting state. Such information can be kept within the respective subsystem, e.g. in a register of connected terminals, or can be maintained in a dedicated database of the service routing decision entity.

The decision information can also be a preference information, associated with a preference set by a user of the mobile terminal, and/or set by an operator of the circuit switched subsystem, and/or set by an operator of the IMS subsystem. Such preference information can e.g. be an indication that voice calls should preferably be routed through the circuit switched subsystem, whereas video calls should preferably be routed through the IMS subsystem.

The decision information can also be a subscription information associated with a subscription of the user of the mobile terminal 12. Such subscription information could e.g. indicate a first and second type of subscription, where each subscription type correlates to certain service routing preferences. For example, the subscriber of a premium service preferably receives all services that can be routed through the IMS subsystem via said IMS subsystem, as opposed to e.g. a standard subscription for which the user preferably always receives voice calls over the circuit switched subsystem.

The decision information can also be a time information associated with a time of day. For example, the service routing decision entity can be arranged such that if a service request arrives at a certain time of day, then a certain type of service is preferably routed via a first subsystem, and preferably via the other subsystem during some other time of day. For example, during a time in which on average the circuit switched subsystem is not used to full capacity (e.g. in the early morning), then specific types of services (e.g. voice calls) are preferably routed through the circuit switched subsystem, whereas at other times of day (e.g. in the evening) at which the circuit switched subsystem is typically used to full capacity, then certain types of service (e.g. voice calls) are preferably routed through the IMS subsystem.

The predetermined decision information can also be a load information associated with a load of one or both of the circuit switched subsystem and the IMS subsystem. For example, if the load in one subsystem exceeds a predetermined threshold, then it can be decided to route such services that the other subsystem can carry over said other subsystem.

The decision information can also be a coverage information associated with a coverage of one or both of the circuit switched subsystem and the IMS subsystem. For example, if the location of the terminal is known, then the service routing decision entity can take coverage information that relates to the coverage area of the respective subsystems into account, in order to decide through which subsystem the service can be routed.

The decision information can also be availability information associated with an availability of one or both of the circuit switched subsystem and the IMS subsystem. For example, if one of the subsystems is not available, then the service routing decision entity can decide to route a requested service through the other subsystem.

The decision information can furthermore comprise a service type information associated with a service type of the given service involving the at least one mobile terminal. An example was already given above in connection with the decision information comprising preference information, namely that e.g. voice calls should preferably be routed through the circuit switched subsystem, whereas video calls should preferably be routed through the IMS subsystem. In this connection it may be noted that the preceding and the following examples of decision information can be combined in any suitable or desirable way for performing the routing decision in the service routing decision entity.

The decision information can also comprise service use information associated with one or more services actively being provided to the at least one mobile terminal. For example, if a particular service (e.g. a voice call) is being provided over the circuit switched subsystem, then the service routing decision entity can decide to route a further, different service (e.g. a video call) over the IMS subsystem.

The decision information can also comprise a connection information associated with one or more active connections involving the subsystems and the mobile terminal. For example, if a connection over the IMS subsystem to the mobile terminal is active, then the service routing decision entity can decide to route a particular service (e.g. a voice call) over the same active connection in the IMS, if the connection provides enough spare bandwidth, even if the desired service is requested for the circuit switched subsystem.

The predetermined decision information can also comprise capability information associated with a capability of the mobile terminal, or associated with a capability of a node of the circuit switched subsystem, or associated with a capability of a node of the IMS subsystem. For example, if the mobile terminal has no capabilities for receiving video data over the circuit switched subsystem, but is capable of receiving such data over the IMS subsystem, then the service routing decision entity can decide to route all video calls via the IMS subsystem, if possible, e.g. if the IMS subsystem is available and the mobile terminal is within coverage range of the IMS subsystem.

As should be understood from the above examples, the concept of service routing is distinct from the idea of packet routing. Packet routing occurs at the network layer L3, whereas service routing is arranged above L3. Service routing is not directed towards the routing of individual packets over routers in a network. Much rather, service routing relates to the choice of a subsystem from among the circuit switched subsystem and the IMS subsystem for a given service. Expressed in terms of layering, the service routing decision entity preferably operates between L7 (application layer) and L4 (transport layer).

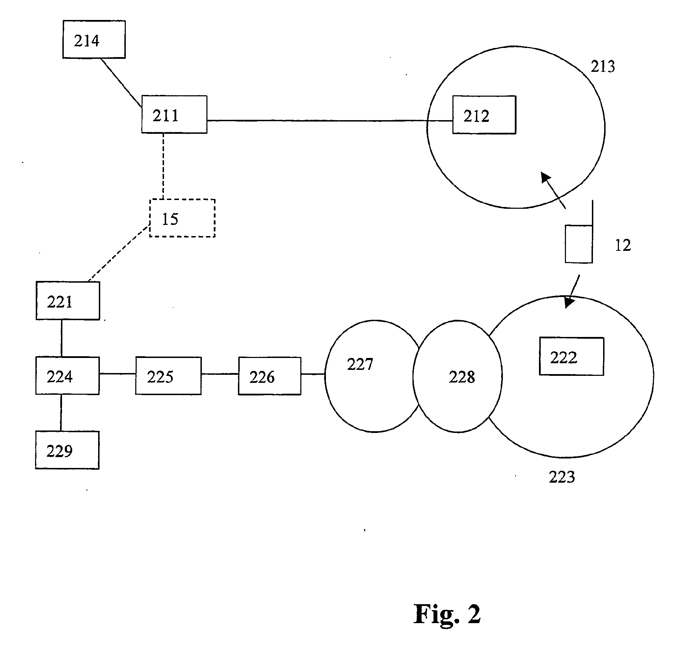

In the example of Fig. 1 the service routing decision entity 15 is shown as a unit separate from the IMS control node 101 and the circuit switched control node 111. However, the service routing decision entity of the invention is spread out over several nodes in and outside of the circuit switched subsystem and the IMS subsystem. This will be explained in more detail with reference to various examples that are based upon Fig. 2.

Fig. 2 shows a circuit switched subsystem and an IMS subsystem in more detail. Reference numeral 211 describes a mobile switching centre (MSC), reference numeral 214 a home location register/visitor location register (HLR/VLR) and reference numeral 212 describes a radio network controller (RNC). Elements 211, 212 and 214 are all part of a circuit switched subsystem. Reference numeral 213 is a coverage area of the circuit switched subsystem, e.g. a WCDMA coverage area.

Reference numeral 221 describes a telephony application server (TAS), reference numeral 224 a serving call/session control function (S-CSCF), reference numeral 225 describes an interrogating call/session control function (I-CSCF), and reference numeral 226 describes a proxy call/session control function (P-CSCF). Reference numeral 229 describes a home subscriber server (HSS). These elements are part of an IMS subsystem. Furthermore, the P-CSCF 226 is connected to a packet switched access network 227, which in turn is connected to a wireless local area network (WLAN) 228. Reference numeral 223 symbolizes the WLAN coverage area, and reference numeral 222 refers to a WLAN serving node (WSN).

As all of the above-described elements of Fig. 2 are well known in the art, a further description is not necessary.

In Fig. 2, a service routing decision entity 15 similar to the one shown in Fig. 1 is indicated in dotted lines. In other words, the service routing decision entity is a unit separate from the control elements 211 and 221.

In the present invention, the service routing decision entity is arranged in such a way that it comprises a first part in the circuit switched subsystem and a second part in the IMS subsystem. The first and the second part can be arranged in a variety of ways, e.g. the first part can be arranged for sending reachability information associated with a reachability of the mobile terminal 12 in the circuit switched subsystem to the second part, and the second part can be arranged for making a routing decision. As an example, if the terminal 12 moves into the coverage area 213 of the circuit switched subsystem, it can perform a location update in the course of which information on the mobile terminals location area is sent to the MSC 211. In accordance with an embodiment of the invention, the MSC 211 comprises the first part of the service routing decision entity and then sends an information signal to the TAS 221, which comprises the second part of the service routing decision entity. The information signal informs the TAS that the subscriber of the mobile terminal is now reachable via the circuit switched subsystem. The second part of the service routing decision entity in the TAS can then make a decision to route certain kinds of services that can be carried over the circuit switched subsystem via said circuit switched subsystem.

As an alternative or in addition to the just described concept, the second part can also be arranged for sending reachability information associated with a reachability of the mobile terminal in the IMS subsystem to the first part, and the first part can be arranged for making a routing decision. Namely, if the mobile terminal 12 moves into the coverage area 223 of the IMS subsystem, it can register or re-register with the TAS 221. The TAS can then inform the MSC 211 that the subscriber of the mobile terminal is reachable via the IMS subsystem. For the MSC 211 this means that it can make decisions to route services that the IMS subsystem can carry through the IMS subsystem.

As a further possibility the service routing decision entity can also entirely or partially be contained in the mobile terminal 12. Examples of this will be described further on.

When using a service routing decision entity of the present invention, a plurality of advantages can be achieved in a system that comprises a circuit switched subsystem and an IMS subsystem. For example:
- if the subscriber of the mobile terminal 12 has circuit switched coverage and performs a location update towards the circuit switched subsystem, the circuit switched subsystem can contact the service routing decision entity and report that the subscriber is now reachable via the circuit switched domain. The service routing decision entity can then use this reachability information for a service routing decision.
- if the subscriber detaches from the HLR/VLR 214 or the subscriber is automatically purged due to a timeout or operation and maintenance interaction, the circuit switched subsystem can inform the service routing decision entity that the subscriber is no longer reachable via the circuit switched subsystem. The service routing decision entity can then use this reachability information for performing a corresponding routing decision.
- if the subscriber of the mobile terminal 12 has left the service area of the current MSC 211 and a cancel location request is received from the HLR/VLR 214, then the circuit switched subsystem can inform the service decision entity that another MSC has to be used.
- if the subscriber of the mobile terminal has IMS coverage and performs a registration to the TAS 221, the IMS subsystem can inform the service routing decision entity that the subscriber is now reachable via the IMS subsystem. The service routing decision entity can then use this reachability information for performing a corresponding routing decision.
- If the subscriber of the mobile terminal 12 de-registers from the TAS 221, or the registration expires, the IMS subsystem can inform the service routing decision entity that the subscriber is no longer reachable via the IMS subsystem. Again, the service routing decision entity can make appropriate use of this reachability information when performing a service routing decision.

In the following, further examples of the action of the service routing decision entity will be described. As a first example, when a terminating IMS call (e.g. a voice call or a video call) is received in the IMS subsystem, the IMS subsystem can query the service routing decision entity for a decision. If only IMS subsystem coverage is currently available, the call is decided to be routed via the IMS subsystem. If only circuit switched subsystem coverage is currently available, the call is decided to be forwarded from the IMS subsystem to the circuit switched subsystem, and the call is delivered via the circuit switched subsystem. If both subsystems are available the service routing decision entity makes a decision through which subsystem to route the call.

When a terminating circuit switched call (e.g. a voice call) is received in the circuit switched subsystem, the circuit switched subsystem queries the service routing decision entity for a decision. If only circuit switched subsystem coverage is currently available, the call is decided to be routed via the circuit switched subsystem. If only IMS coverage is currently available, the call is decided to be forwarded from the circuit switched towards the IMS subsystem, and the call is routed via the IMS subsystem. If both subsystems are available, the service routing decision entity makes a decision which subsystem to use for the call.

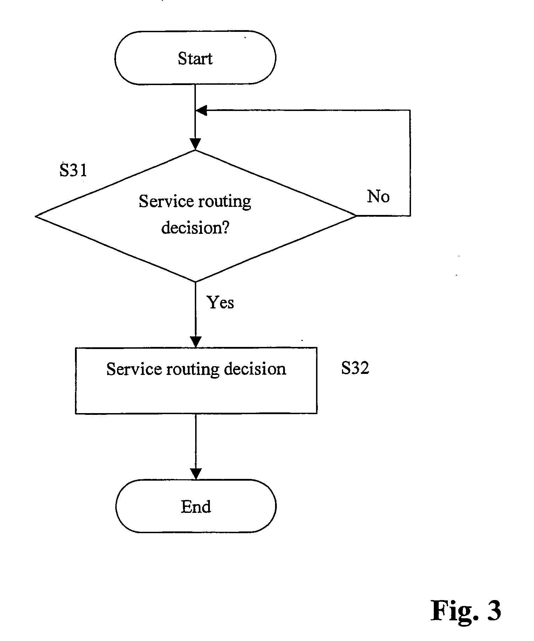

A basic service routing decision method is shown in the flowchart of Fig. 3. In a first step S31 it is established whether a service routing decision is to be made or not, and if a service routing decision is to be made, this is accomplished in step S32. The service routing decision in step S32 is associated with a given service involving the mobile terminal, with respect to routing the given service via one or both of the circuit switched subsystem and the IMS subsystem, based on predetermined decision information, as previously described.

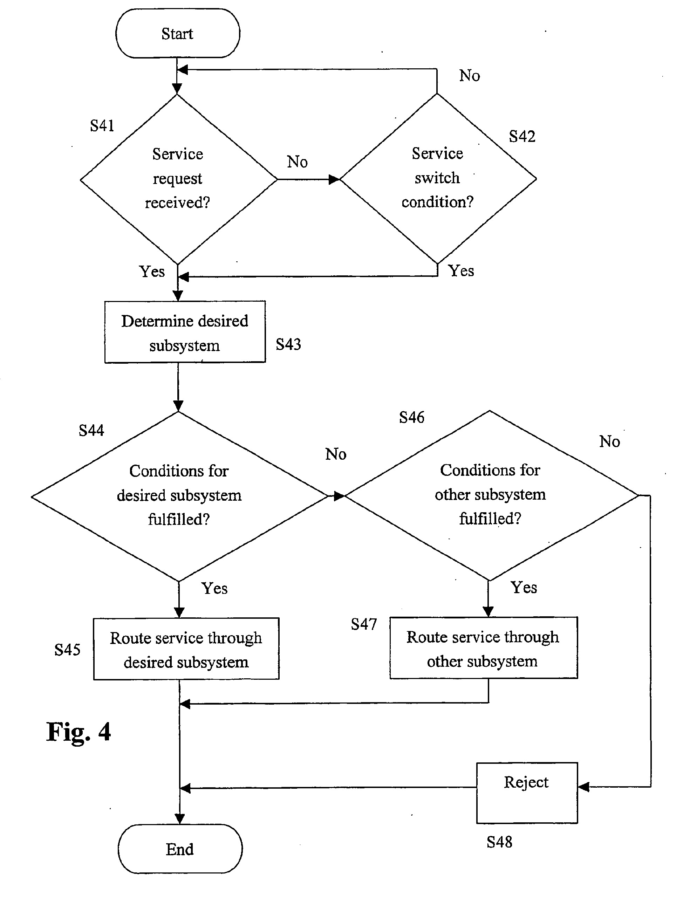

Fig. 4 shows a method embodiment of the present invention. In a first step S41 it is determined whether a service request has been received. If not, it is determined wether a service switch condition is present. It may be noted that steps S41 and S42 are an example of the basic step S31 shown in Fig. 3, namely whether a service routing decision is to be made. In the example of Fig. 4, the service request of step S41 can e.g. be a request for a terminating service to the terminal, such as sending a call or message to the terminal, or it can be a request for originating a service, i.e. the terminal wanting to send a call or a message.

The service switch condition of step S42 relates to a situation when a service is already being provided, e.g. a call to the terminal is in progress, and a situation is reached where the switching of the service from the present subsystem to the other subsystem is considered desirable, e.g. if the transmission conditions in the subsystem presently carrying the service deteriorate below a predetermined threshold.

If steps S41 or S42 indicate that a service routing decision is to be made, the flow proceeds to step S43, in which a desired subsystem is determined. The desired subsystem can be chosen in any suitable or desirable way, and will generally depend on one or more of the previously described types of decision information. For example, the procedure in step S42 can be such that if a service request for a certain type of service has been received (e.g. a request for a voice call), then S43 looks up a preference information, where it is e.g. laid down that the circuit switched subsystem is the preferred subsystem for voice calls. In such an example, step S43 would then select the circuit switched subsystem as the desired subsystem.

The flow then precedes to step S44, in which it is determined whether one or more predetermined first conditions associated with the desired subsystem and with predetermined decision information are fulfilled. For example, in keeping with the previous examples of a voice call preferably being routed through the circuit switched subsystem, step S44 could comprise checking whether the circuit switched subsystem is available and/or whether the mobile terminal is within the coverage of the circuit switched subsystem.

If the predetermined first conditions are fulfilled, then the method proceeds to step S45, in which it is decided to route the service through the desired subsystem, i.e. through the circuit switched subsystem in the above mentioned example. On the other hand, if step S44 indicates that the first conditions are not fulfilled, the method precedes to step S46, in which it is determined whether one or more predetermined second conditions associated with the other subsystem than the desired subsystem (the IMS subsystem in the above-mentioned example of a voice call and the circuit switched subsystem being preferred for voice calls) and the predetermined decision information are fulfilled. For example, the conditions and related decision information could be to check whether the IMS subsystem is available, whether the terminal is within the coverage area of the IM subsystem (these conditions and this information is the same as was checked in the example with respect to step S44), and in addition step S46 could e.g. check whether the terminal device is capable of receiving the voice call via the IMS subsystem (this is an example of an additional condition and information with respect to the conditions and information checked in step S44). Naturally, the indicated conditions and information items are only examples to illustrate the more general concept indicated in steps S44 and S46.

If the outcome of step S46 is such that the second conditions are fulfilled, then the method precedes to step S47, in which it is decided to route the given service through the other subsystem.

If the outcome of step S46 is negative, i.e. that the second conditions are also not fulfilled, then there are two basic possibilities for proceeding further. One, which is shown in the method of Fig. 4, consists in simply rejecting the routing of the given service. In this way, a hunting situation is avoided, i.e. a situation where the service routing decision entity and method would repeatedly attempt to route through the circuit switched subsystem and the IMS subsystem.

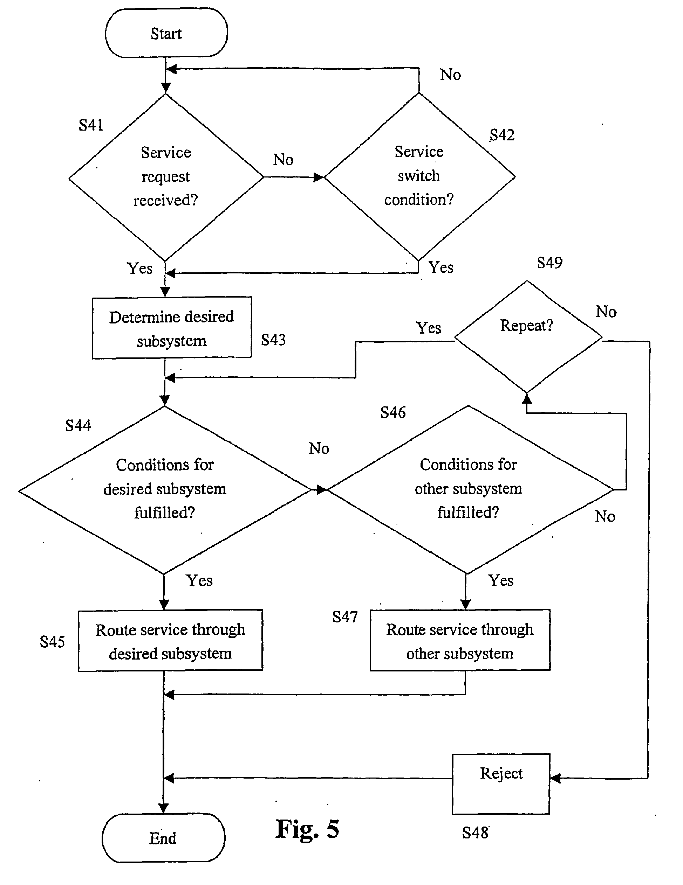

However, it may be desirable to allow a limited amount of hunting, which is shown in the example of Fig. 5. The example of Fig. 5 is identical to that of Fig. 4, except that if the outcome of step S46 is negative, then it is checked in S49 whether a repeat interruption condition is fulfilled, and if not, steps S44 and possibly S46 are repeated. If the repeat interruption condition is fulfilled, then the method proceeds to step S48, in which routing of the given service is rejected, similar to the immediate decision in Fig. 4. The repeat interruption condition could e.g. be fixed as a number of times for attempting to route through the two subsystems, or could be a time condition, i.e. where the routing attempts are repeated for a predetermined time period. In other words, the repeat interruption condition is reached if a certain number of repetitions has occurred, or if a certain amount of time has passed.

The example of Fig. 5 is related to the general concept of repeating the determining steps S44, S46 with respect to the predetermined first and second conditions until one of the first conditions are fulfilled, upon which it is decided to route the given service through the desired subsystem, or the second conditions are fulfilled, upon which it is decided to route the given service through the other subsystem than the desired subsystem, or a repeat-interruption condition is fulfilled, upon which routing the given service is rejected.

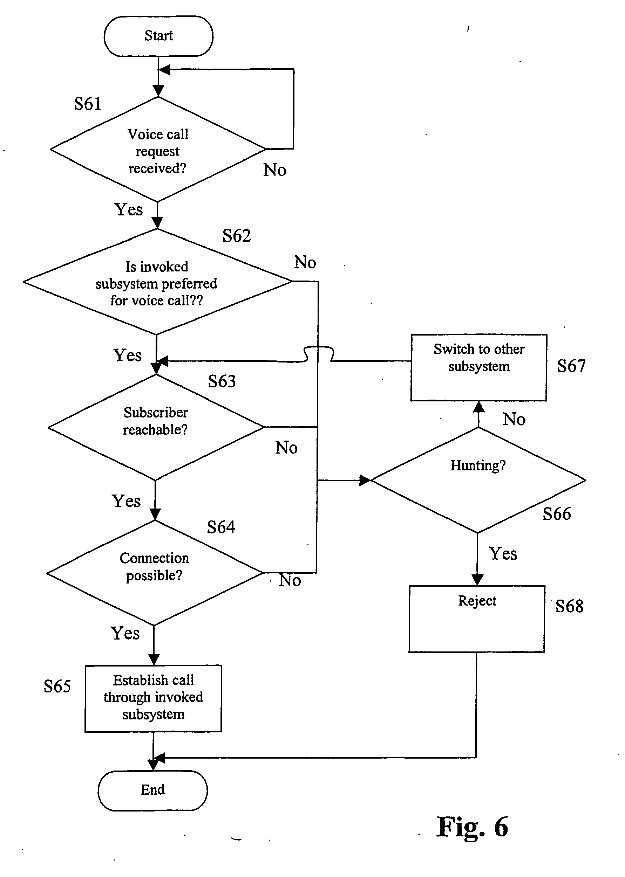

It is noted that the embodiments of Figs. 4 and 5 are only examples, and that the concepts embodied therein can also be expressed in arrangements having a different sequence of steps. For example, Fig. 6 shows a method embodiment in which the procedure in the service routing decision entity for processing a request for a voice call is shown. In step S61 it is determined whether a voice call request has been received. If yes, step S62 determines whether the invoked subsystem (i.e. the subsystem requested in the voice call request) is preferred for a voice call. If the invoked system is preferred, then step S63 determines whether the subscriber is reachable (i.e. the decision information here is reachability information). If yes, step S64 determines whether a connection is possible (e.g. using availability information and/or capability information). If step S64 indicates that a connection is possible, then step S65 decides to establish the voice call through the invoked subsystem.

If on the other hand step S62 indicates that the invoked subsystem is not preferred, or step S63 indicates that the subscriber is not reachable in the invoked subsystem, or step S64 indicates that a connection is not possible in the invoked subsystem, then the method proceeds to step S66, in which it is determined whether a hunting case is present. This means it is determined whether the other subsystem than the invoked subsystem has already been checked for possibly establishing the voice call. If it has, then there is a hunting condition and step S66 passes to step S68, in which it is decided to reject routing the given service. On the other hand, if it is not a hunting case, then step S67 switches to the other subsystem as the invoked subsystem, and loops back to step S63, in which it is determined whether the subscriber is reachable via that subsystem, and if yes, step S64 determines whether a connection is possible through that subsystem. If yes, the call is established through the other subsystem, and if not, due to the hunting condition now being met, the routing of the service will be rejected. Therefore, comparing Figs. 6 and 4, it can be seen that step S62 is an example for step S43, and that steps S63, S64 are an example for steps S44 or S46, because the first and second conditions described in connection with Fig. 4 are identical in the example of Fig. 6. Furthermore, step S65 is an example for steps S45 or S47.

The marking of a service as a hunting case can be achieved using a database, where possibly an already existing database can be used or a new dedicated database will be set up. Alternatively, one can mark a service by a hop counter. As another alternative, one can include a marker in the service request to state that it should not be looped back to the other subsystem if the desired subsystem cannot complete the service.

The service routing decision entity and method can be used for terminating and originating services. In the case of the terminal originating a service request, two basic cases are possible. The terminal can make a service request via the circuit switched subsystem, whereupon the circuit switched subsystem queries the service routing decision entity for a decision. If the service routing decision entity decides that the service switched subsystem is to be used, the service is set up via the circuit switched domain. If the service routing decision entity decides that the IMS subsystem is to be used, the service desired by the terminal is rejected with an indication that the IMS subsystem is to be used.

If the terminal makes a service request via the IMS subsystem, the IMS subsystem can query the service routing decision entity for a decision. If the service routing decision entity decides that the IMS subsystem is to be used, the service is set up via the IMS subsystem. If the service routing decision entity decides that the circuit switched subsystem is to be used, the service routing decision entity rejects the service set up with an indication that the circuit switched subsystem is to be used.

It is noted that the service routing decision entity can entirely or partially also be placed into the mobile terminal, for making decisions relating to service requests originating at the terminal.

A number of different arrangements could be used for embodying the service routing decision entity in the mobile terminal:
- the subsystem selection could e.g. be based on a terminal setting, which could in turn be static, dynamic, based on terminal capability, etc.
- the subsystem selection can be based on a preference set by the subscriber of the terminal, where the subscriber preference setting can be managed in the terminal.
- the subsystem selection logic or network preferences can be sent from the network via over-the-air (OTA) activation procedures and stored in the terminal. Another mechanism for providing logic to the terminal can be by using the SIM toolkit or a configuration SMS.
- the network's subsystem selection preferences can be sent from the network at the time of location update or registration.

As already mentioned previously, the service routing decision entity of the present invention can be located in one node or spread out over several nodes. For example, it can be a stand-alone application server (as indicated in dotted lines in Fig. 2) that is separate from the MSC 211 and the TAS 221. The advantage of such a solution is that it does not put any additional load on existing nodes, and that there is a central implementation, i.e. direct and central administration.

On the other hand, the service routing decision entity can also be embodied within the TAS 221 or within the MSC 211. This has the advantage that no new servers are needed and it optimises the routing for given access types. However, it causes additional load on existing nodes.

Furthermore, the service routing decision entity can be embodied as an internal function in a combined MSC/TAS, i.e. in a control node common to the circuit switched subsystem and the IMS subsystem. This has the advantage that no new external interfaces are needed and it can be a proprietary enhancement of such a combined MSC/TAS.

The service routing decision entity can also be embodied as a part of the HSS 229 or the HLR/VLR 214. This has advantages if the decision information is primarily related to subscriber data, because the subscriber data is held at the HSS or HLR. On the other hand, it has the disadvantage of creating a high load on the HSS or HLR.

Although the present invention has been described on the basis of preferred embodiments, these only serve to provide a better understanding of the invention and are not intended to be limiting. The scope of protection is defined by the appended claims. Reference signs and numerals in the claims have no limiting effect and only serve to make the claims easier to read.

## Claims

1. A service routing decision entity (15) for a system that comprises a circuit switched subsystem (11), an Internet Protocol Multimedia System subsystem (10) and at least one mobile terminal (12) suitable for communication with said circuit switched subsystem (11) and said Internet Protocol Multimedia System subsystem (10), said circuit switched subsystem (11) providing a first set of services and said Internet Protocol Multimedia System subsystem (10) providing a second set of services, said first and second set of services being at least partially overlapping, said service routing decision entity (15) being arranged for making a routing decision associated with a given service involving said at least one mobile terminal (12) with respect to routing said given service via one or both of said circuit switched subsystem (11) and said Internet Protocol Multimedia System subsystem (10), based on predetermined decision information, said service routing decision entity (15) comprising a first part in the circuit switched subsystem (11) and a second part in the Internet Protocol Multimedia System subsystem (10), said second part being arranged for sending reachability information associated with a reachability of said at least one mobile terminal (12) in said Internet Protocol Multimedia System subsystem (10) to said first part, and said first part being arranged for making the routing decision, in order to obtain an efficient use of the subsystems, wherein the first part is arranged to make the routing decision by:
determining one of said circuit switched subsystem (11) and said Internet Protocol Multimedia System subsystem (10) as a desired subsystem for said given service,
determining whether one or more predetermined first conditions associated with said desired subsystem and said predetermined decision information are fulfilled,
deciding to route said given service through said desired subsystem if said one or more predetermined first conditions are fulfilled,
if said one or more predetermined first conditions are not fulfilled, determining (S46) whether one or more predetermined second conditions associated with the other than said desired subsystem and said predetermined decision information are fulfilled, and
deciding to route said given service through said other than said desired subsystem if said one or more predetermined second conditions are fulfilled.

2. The service routing decision entity (15) of claim 1, wherein said decision information comprises one or more of
- a reachability information associated with a reachability of said mobile terminal (12) via one or both of said circuit switched subsystem (11) and said Internet Protocol Multimedia System subsystem (10),
- a preference information associated with a preference set by a user of said at least one mobile terminal (12),
- a preference information associated with a preference set by an operator of said circuit switched subsystem (11) ,
- a preference information associated with a preference set by an operator of said Internet Protocol Multimedia System subsystem (10),
- a subscription information associated with a subscription of said user of said at least one mobile terminal (12),
- a time information associated with a time of day,
- a load information associated with a load of one or both of said circuit switched subsystem (11) and said Internet Protocol Multimedia System subsystem (10),
- a coverage information associated with a coverage of one or both of said circuit switched subsystem (11) and said Internet Protocol Multimedia System subsystem (10),
- an availability information associated with an availability of one or both of said circuit switched subsystem (11) and said Internet Protocol Multimedia System subsystem (10),
- a service type information associated with a service type of said given service involving said at least one mobile terminal (12),
- a service use information associated with one or more services actively being provided to said at least one mobile terminal (12),
- a connection information associated with one or more active connections involving one or more of said circuit switched subsystem (11), said Internet Protocol Multimedia System subsystem (10) and said mobile terminal (12),
- a terminal capability information associated with a capability of said mobile terminal (12),
- a circuit switched subsystem node capability information associated with a capability of a node of said circuit switched subsystem (11), and
- an Internet Protocol Multimedia System subsystem (10) node capability information associated with a capability of a node of said Internet Protocol Multimedia System subsystem (10).

3. The service routing decision entity (15) of claim 1 or 2, where said first part is arranged for sending reachability information associated with a reachability of said at least one mobile terminal (12) in said circuit switched subsystem (11) to said second part, and said second part is arranged for making a routing decision.

4. The service routing decision entity (15) of one of claims 1 to 3, wherein at least a part of said service routing entity is contained in said at least one mobile terminal (12).

5. A service routing decision method for a system that comprises a circuit switched subsystem (11), an Internet Protocol Multimedia System subsystem (10) and at least one mobile terminal (12) suitable for communication with said circuit switched subsystem (11) and said Internet Protocol Multimedia System subsystem (10), said circuit switched subsystem (11) providing a first set of services and said Internet Protocol Multimedia System subsystem (10) providing a second set of services, said first and second set of services being at least partially overlapping, said service routing decision method comprising:
making (S32) a service routing decision in a service routing decision entity (15), said service routing decision being associated with a given service involving said at least one mobile terminal (12) with respect to routing said given service via one or both of said circuit switched subsystem (11) and said Internet Protocol Multimedia System subsystem (10), based on predetermined decision information, said service routing decision entity (15) comprising a first part in the circuit switched subsystem (11) and a second part in the Internet Protocol Multimedia System subsystem (10), said second part being arranged for sending reachability information associated with a reachability of said at least one mobile terminal in said Internet Protocol Multimedia System subsystem (10) to said first part, and said first part being arranged for making the routing decision, in order to obtain an efficient use of the subsystems, wherein the service routing decision method further comprises the steps of:
determining (S43) one of said circuit switched subsystem (11) and said Internet Protocol Multimedia System subsystem (10) as a desired subsystem for said given service,
determining (S44) whether one or more predetermined first conditions associated with said desired subsystem and said predetermined decision information are fulfilled,
deciding (S45) to route said given service through said desired subsystem if said one or more predetermined first conditions are fulfilled,
if said one or more predetermined first conditions are not fulfilled, determining (S46) whether one or more predetermined second conditions associated with the other than said desired subsystem and said predetermined decision information are fulfilled, and
deciding (S47) to route said given service through said other than said desired subsystem if said one or more predetermined second conditions are fulfilled.

6. The service routing decision method of claim 5, wherein said decision information comprises one or more of
- a reachability information associated with a reachability of said mobile terminal (12) via one or both of said circuit switched subsystem (11) and said Internet Protocol Multimedia System subsystem (10),
- a preference information associated with a preference set by a user of said at least one mobile terminal (12),
- a preference information associated with a preference set by an operator of said circuit switched subsystem (11),
- a preference information associated with a preference set by an operator of said Internet Protocol Multimedia System subsystem (10),
- a subscription information associated with a subscription of said user of said at least one mobile terminal (12),
- a time information associated with a time of day,
- a load information associated with a load of one or both of said circuit switched subsystem (11) and said Internet Protocol Multimedia System subsystem (10),
- a coverage information associated with a coverage of one or both of said circuit switched subsystem (11) and said Internet Protocol Multimedia System subsystem (10),
- an availability information associated with an availability of one or both of said circuit switched subsystem (11) and said Internet Protocol Multimedia System subsystem (10),
- a service type information associated with a service type of said given service involving said at least one mobile terminal(12),
- a service use information associated with one or more services actively being provided to said at least one mobile terminal (12),
- a connection information associated with one or more active connections involving one or more of said circuit switched subsystem (11) , said Internet Protocol Multimedia System subsystem (10) and said mobile terminal (12),
- a terminal capability information associated with a capability of said mobile terminal (12),
- a circuit switched subsystem (11) node capability information associated with a capability of a node of said circuit switched subsystem (11), and
- an Internet Protocol Multimedia System subsystem (10) node capability information associated with a capability of a node of said Internet Protocol Multimedia System subsystem (10).

7. The service routing decision method of claim 5 or 6, comprising: rejecting (S48) routing said given service if said one or more predetermined second conditions are not fulfilled.

8. The service routing decision method of claim 5 or 6, comprising:
repeating said determining steps with respect to said predetermined first and second conditions until one of
said first conditions are fulfilled, upon which it is decided to route said given service through said desired subsystem,
said second conditions are fulfilled, upon which it is decided to route said given service through said other subsystem than said desired subsystem, and
a repeat-interruption condition is fulfilled, upon which routing said given service is rejected.

## Patentansprüche

1. Dienst-Routing-Entscheidungsentität (15) für ein System, das ein leitungsvermitteltes Subsystem (11), ein Internetprotokoll-Multimediasystem-Subsystem (10) und mindestens ein mobiles Endgerät (12) umfasst, das zur Kommunikation mit dem leitungsvermittelten Subsystem (11) und dem Internetprotokoll-Multimediasystem-Subsystem (10) geeignet ist, wobei das leitungsvermittelte Subsystem (11) einen ersten Satz von Diensten bereitstellt und das Internetprotokoll-Multimediasystem-Subsystem (10) einen zweiten Satz von Diensten bereitstellt, und der erste und der zweite Satz von Diensten einander wenigstens teilweise überlappen, wobei die Dienst-Routing-Entscheidungsentität (15) zum Fällen einer Routing-Entscheidung, die mit einem bestimmten Dienst assoziiert ist, der das mindestens eine mobile Endgerät (12) einbezieht, in Bezug auf das Routing des bestimmten Dienstes über eines oder beide von dem leitungsvermittelten Subsystem (11) und dem Internetprotokoll-Multimediasystem-Subsystem (10) basierend auf vorbestimmten Entscheidungsinformationen ausgelegt ist, und die Dienst-Routing-Entscheidungsentität (15) einen ersten Teil im leitungsvermittelten Subsystem (11) und einen zweiten Teil im Internetprotokoll-Multimediasystem-Subsystem (10) umfasst, wobei der zweite Teil zum Senden von Erreichbarkeitsinformationen, die mit der Erreichbarkeit des mindestens einen mobilen Endgeräts (12) im Internetprotokoll-Multimediasystem-Subsystem (10) assoziiert sind, an den ersten Teil ausgelegt ist, und der erste Teil zum Fällen der Routing-Entscheidung ausgelegt ist, um eine wirksame Verwendung des Subsystems zu erhalten, wobei der erste Teil so ausgelegt ist, dass er die Routing-Entscheidung fällt durch:
Bestimmen eines von dem leitungsvermittelten Subsystem (11) und dem Internetprotokoll-Multimediasystem-Subsystem (10) als ein gewünschtes Subsystem für den bestimmten Dienst,
Bestimmen, ob eine oder mehrere vorbestimmte erste Bedingungen, die mit dem gewünschten Subsystem und den vorbestimmten Entscheidungsinformationen assoziiert sind, erfüllt werden,
Entscheiden, den bestimmten Dienst durch das gewünschte Subsystem zu leiten, wenn die eine oder die mehreren vorbestimmten ersten Bedingungen erfüllt werden,
Bestimmen (S46), wenn die eine oder die mehreren vorbestimmten ersten Bedingungen nicht erfüllt werden, ob eine oder mehrere vorbestimmte zweite Bedingungen, die mit dem anderen als dem gewünschten Subsystem und den vorbestimmten Entscheidungsinformationen assoziiert sind, erfüllt werden, und
Entscheiden, den bestimmten Dienst durch das andere als das gewünschte Subsystem zu leiten, wenn die eine oder die mehreren vorbestimmten zweiten Bedingungen erfüllt werden.

2. Dienst-Routing-Entscheidungsentität (15) nach Anspruch 1, wobei die Entscheidungsinformationen eine oder mehrere von folgenden Informationen umfassen:
- Erreichbarkeitsinformationen, die mit einer Erreichbarkeit des mobilen Endgeräts (12) über eines oder beide von dem leitungsvermittelten Subsystem (11) und dem Internetprotokoll-Multimediasystem-Subsystem (10) assoziiert sind,
- Prioritätsinformationen, die mit einer Priorität assoziiert sind, die von einem Benutzer des mindestens einen mobilen Endgeräts (12) gesetzt ist,
- Prioritätsinformationen, die mit einer Priorität assoziiert sind, die von einem Betreiber des leitungsvermittelten Subsystems (11) gesetzt ist,
- Prioritätsinformationen, die mit einer Priorität assoziiert sind, die von einem Betreiber des Internetprotokoll-Multimediasystem-Subsystems (10) gesetzt ist,
- Subskriptionsinformationen, die mit einer Subskription des Benutzers des mindestens einen mobilen Endgeräts (12) assoziiert sind,
- Zeitinformationen, die mit einer Tageszeit assoziiert sind,
- Auslastungsinformationen, die mit einer Auslastung von einem oder beiden von dem leitungsvermittelten Subsystem (11) und dem Internetprotokoll-Multimediasystem-Subsystem (10) assoziiert sind,
- Versorgungsbereichsinformationen, die mit einem Versorgungsbereich von einem oder beiden von dem leitungsvermittelten Subsystem (11) und dem Internetprotokoll-Multimediasystem-Subsystem (10) assoziiert sind,
- Verfügbarkeitsinformationen, die mit einer Verfügbarkeit von einem oder beiden von dem leitungsvermittelten Subsystem (11) und dem Internetprotokoll-Multimediasystem-Subsystem (10) assoziiert sind,
- Diensttypinformationen, die mit einem Diensttyp des bestimmten Dienstes assoziiert sind, der das mindestens eine mobile Endgerät (12) einbezieht,
- Dienstverwendungsinformationen, die mit einem oder mehreren Diensten assoziiert sind, die dem mindestens einen mobilen Endgerät (12) aktiv zur Verfügung gestellt werden,
- Verbindungsinformationen, die mit einer oder mehreren aktiven Verbindungen assoziiert sind, die eines oder mehrere von dem leitungsvermittelten Subsystem (11), dem Internetprotokoll-Multimedia-System-Subsystem (10) und dem mobilen Endgerät (12) einbeziehen,
- Informationen über die Leistungsfähigkeit des Endgeräts, die mit einer Leistungsfähigkeit des mobilen Endgeräts (12) assoziiert sind,
- Informationen über die Leistungsfähigkeit eines Knotens des leitungsvermittelten Subsystems, die mit einer Leistungsfähigkeit eines Knotens des leitungsvermittelten Subsystems (11) assoziiert sind, und
- Informationen über die Leistungsfähigkeit eines Knotens des Internetprotokoll-Multimediasystem-Subsystems (10), die mit einer Leistungsfähigkeit eines Knotens des Internetprotokoll-Multimediasystem-Subsystems (10) assoziiert sind.

3. Dienst-Routing-Entscheidungsentität (15) nach Anspruch 1 oder 2, wobei der erste Teil zum Senden von Erreichbarkeitsinformationen, die mit einer Erreichbarkeit des mindestens einen mobilen Endgeräts (12) im leitungsvermittelten Subsystem (11) assoziiert sind, an den zweiten Teil ausgelegt ist, und der zweite Teil zum Fällen einer Routing-Entscheidung ausgelegt ist.

4. Dienst-Routing-Entscheidungsentität (15) nach einem der Ansprüche 1 bis 3, wobei wenigstens ein Teil der Dienst-Routing-Entität in dem mindestens einen mobilen Endgerät (12) enthalten ist.

5. Dienst-Routing-Entscheidungsverfahren für ein System, das ein leitungsvermitteltes Subsystem (11), ein Internetprotokoll-Multimediasystem-Subsystem (10) und mindestens ein mobiles Endgerät (12) umfasst, das zur Kommunikation mit dem leitungsvermittelten Subsystem (11) und dem Internetprotokoll-Multimediasystem-Subsystem (10) geeignet ist, wobei das leitungsvermittelte Subsystem (11) einen ersten Satz von Diensten bereitstellt und das Internetprotokoll-Multimediasystem-Subsystem (10) einen zweiten Satz von Diensten bereitstellt, und der erste und der zweite Satz von Diensten einander wenigstens teilweise überlappen, wobei das Dienst-Routing-Entscheidungsverfahren umfasst:
Fällen (S32) einer Dienst-Routing-Entscheidung in einer Dienst-Routing-Entscheidungsentität (15), wobei die Dienst-Routing-Entscheidung mit einem bestimmten Dienst assoziiert ist, der das mindestens eine mobile Endgerät (12) einbezieht, in Bezug auf das Routing des bestimmten Dienstes über eines oder beide von dem leitungsvermittelten Subsystem (11) und dem Internetprotokoll-Multimediasystem-Subsystem (10) basierend auf vorbestimmten Entscheidungsinformationen, wobei die Dienst-Routing-Entscheidungsentität (15) einen ersten Teil im leitungsvermittelten Subsystem (11) und einen zweiten Teil im Internetprotokoll-Multimediasystem-Subsystem (10) umfasst, wobei der zweite Teil zum Senden von Erreichbarkeitsinformationen, die mit der Erreichbarkeit des mindestens einen mobilen Endgeräts im Internetprotokoll-Multimediasystem-Subsystem (10) assoziiert sind, an den ersten Teil ausgelegt ist, und der erste Teil zum Fällen der Routing-Entscheidung ausgelegt ist, um eine wirksame Verwendung des Subsystems zu erhalten, wobei das Dienst-Routing-Entscheidungsverfahren ferner die folgenden Schritte umfasst:
Bestimmen (S43) eines von dem leitungsvermittelten Subsystem (11) und dem Internetprotokoll-Multimediasystem-Subsystem (10) als ein gewünschtes Subsystem für den bestimmten Dienst,
Bestimmen (S44), ob eine oder mehrere vorbestimmte erste Bedingungen, die mit dem gewünschten Subsystem und den vorbestimmten Entscheidungsinformationen assoziiert sind, erfüllt werden,
Entscheiden (S45), den bestimmten Dienst durch das gewünschte Subsystem zu leiten, wenn die eine oder die mehreren vorbestimmten ersten Bedingungen erfüllt werden,
Bestimmen (S46), wenn die eine oder die mehreren vorbestimmten ersten Bedingungen nicht erfüllt werden, ob eine oder mehrere vorbestimmte zweite Bedingungen, die mit dem anderen als dem gewünschten Subsystem und den vorbestimmten Entscheidungsinformationen assoziiert sind, erfüllt werden, und
Entscheiden (S47), den bestimmten Dienst durch das andere als das gewünschte Subsystem zu leiten, wenn die eine oder die mehreren vorbestimmten zweiten Bedingungen erfüllt werden.

6. Dienst-Routing-Entscheidungsverfahren nach Anspruch 5, wobei die Entscheidungsinformationen eine oder mehrere von folgenden Informationen umfassen:
- Erreichbarkeitsinformationen, die mit einer Erreichbarkeit des mobilen Endgeräts (12) über eines oder beide von dem leitungsvermittelten Subsystem (11) und dem Internetprotokoll-Multimediasystem-Subsystem (10) assoziiert sind,
- Prioritätsinformationen, die mit einer Priorität assoziiert sind, die von einem Benutzer des mindestens einen mobilen Endgeräts (12) gesetzt ist,
- Prioritätsinformationen, die mit einer Priorität assoziiert sind, die von einem Betreiber des leitungsvermittelten Subsystems (11) gesetzt ist,
- Prioritätsinformationen, die mit einer Priorität assoziiert sind, die von einem Betreiber des Internetprotokoll-Multimediasystem-Subsystems (10) gesetzt ist,
- Subskriptionsinformationen, die mit einer Subskription des Benutzers des mindestens einen mobilen Endgeräts (12) assoziiert sind,
- Zeitinformationen, die mit einer Tageszeit assoziiert sind,
- Auslastungsinformationen, die mit einer Auslastung von einem oder beiden von dem leitungsvermittelten Subsystem (11) und dem Internetprotokoll-Multimediasystem-Subsystem (10) assoziiert sind,
- Versorgungsbereichsinformationen, die mit einem Versorgungsbereich von einem oder beiden von dem leitungsvermittelten Subsystem (11) und dem Internetprotokoll-Multimediasystem-Subsystem (10) assoziiert sind,
- Verfügbarkeitsinformationen, die mit einer Verfügbarkeit von einem oder beiden von dem leitungsvermittelten Subsystem (11) und dem Internetprotokoll-Multimediasystem-Subsystem (10) assoziiert sind,
- Diensttypinformationen, die mit einem Diensttyp des bestimmten Dienstes assoziiert sind, der das mindestens eine mobile Endgerät (12) einbezieht,
- Dienstverwendungsinformationen, die mit einem oder mehreren Diensten assoziiert sind, die dem mindestens einen mobilen Endgerät (12) aktiv zur Verfügung gestellt werden,
- Verbindungsinformationen, die mit einer oder mehreren aktiven Verbindungen assoziiert sind, die eines oder mehrere von dem leitungsvermittelten Subsystem (11), dem Internetprotokoll-Multimedia-System-Subsystem (10) und dem mobilen Endgerät (12) einbeziehen,
- Informationen über die Leistungsfähigkeit des Endgeräts, die mit einer Leistungsfähigkeit des mobilen Endgeräts (12) assoziiert sind,
- Informationen über die Leistungsfähigkeit eines Knotens des leitungsvermittelten Subsystems (11), die mit einer Leistungsfähigkeit eines Knotens des leitungsvermittelten Subsystems (11) assoziiert sind, und
- Informationen über die Leistungsfähigkeit eines Knotens des Internetprotokoll-Multimediasystem-Subsystems (10), die mit einer Leistungsfähigkeit eines Knotens des Internetprotokoll-Multimediasystem-Subsystems (10) assoziiert sind.

7. Dienst-Routing-Entscheidungsverfahren nach Anspruch 5 oder 6, umfassend: Zurückweisen (S48) des bestimmten Dienstes, wenn die eine oder die mehreren vorbestimmten zweiten Bedingungen nicht erfüllt werden.

8. Dienst-Routing-Entscheidungsverfahren nach Anspruch 5 oder 6, umfassend:
Wiederholen der Bestimmungsschritte in Bezug auf die vorbestimmten ersten und zweiten Bedingungen, bis eines erfüllt wird von:
den ersten Bedingungen, woraufhin entschieden wird, den bestimmten Dienst durch das gewünschte Subsystem zu leiten,
den zweiten Bedingungen, worauf entschieden wird, den bestimmten Dienst durch das andere als das gewünschte Subsystem zu leiten, und
einer Wiederholungsunterbrechungsbedingung, woraufhin das Routing des bestimmten Dienstes zurückgewiesen wird.

## Revendications

1. Entité de décision de routage de service (15) pour un système qui comprend un sous-système à commutation de circuits (11), un sous-système de Système Multimédia à Protocole Internet (10) et au moins un terminal mobile (12) approprié à une communication avec ledit sous-système à commutation de circuits (11) et ledit sous-système de Système Multimédia à Protocole Internet (10), ledit sous-système à commutation de circuits (11) fournissant un premier ensemble de services et ledit sous-système de Système Multimédia à Protocole Internet (10) fournissant un second ensemble de services, ledit premier et ledit second ensemble de services se superposant au moins partiellement, ladite entité de décision de routage de service (15) étant agencée afin de prendre une décision de routage associée à un service donné impliquant ledit au moins un terminal mobile (12) en ce qui concerne le routage dudit service donné via un ou les deux dudit sous-système à commutation de circuits (11) et dudit sous-système de Système Multimédia à Protocole Internet (10), sur la base d'une information de décision prédéterminée, ladite entité de décision de routage de service (15) comprenant une première partie dans le sous-système à commutation de circuits (11) et une seconde partie dans le sous-système de Système Multimédia à Protocole Internet (10), ladite seconde partie étant agencée afin d'envoyer une information de joignabilité associée à une joignabilité dudit au moins un terminal mobile (12) dans ledit sous-système de Système Multimédia à Protocole Internet (10)à ladite première partie, et ladite première partie étant agencée afin de prendre la décision de routage, de manière à obtenir une utilisation efficace des sous-systèmes, dans lequel la première partie est agencée afin de prendre la décision de routage en :
déterminant un dudit sous-système à commutation de circuits (11) et dudit sous-système de Système Multimédia à Protocole Internet (10) comme un sous-système désiré pour ledit service donné,
déterminant si une ou plusieurs premières conditions prédéterminées associées audit sous-système désiré et à ladite information de décision prédéterminée sont remplies,
décidant de router ledit service donné à travers ledit sous-système désiré si lesdites une ou plusieurs premières conditions prédéterminées sont remplies,
si lesdites une ou plusieurs premières conditions prédéterminées ne sont pas remplies, déterminant (S46) si une ou plusieurs secondes conditions prédéterminées associées à l'autre que ledit sous-système désiré et ladite information de décision prédéterminée sont remplis, et
décidant de router ledit service donnée à travers ledit autre que ledit sous-système désiré si lesdites une ou plusieurs secondes conditions prédéterminées sont remplies.

2. Entité de décision de routage de service (15) selon la revendication 1, dans laquelle ladite information de décision comprend un ou plusieurs de :
- une information de joignabilité associée à une joignabilité dudit terminal mobile (12) via un ou les deux dudit sous-système à commutation de circuits (11) et dudit sous-système de Système Multimédia à Protocole Internet (10),
- une information de préférence associée à une préférence réglée par un utilisateur dudit au moins un terminal mobile (12),
- une information de préférence associée à une préférence réglée par un opérateur dudit sous-système à commutation de circuits (11),
- une information de préférence associée à une préférence réglée par un opérateur dudit sous-système de Système Multimédia à Protocole Internet (10),
- une information d'abonnement associée à un abonnement dudit utilisateur dudit au moins un terminal mobile (12),
- une information de temps associée à un moment de la journée,
- une information de charge associée à une charge d'un ou des deux dudit sous-système à commutation de circuits (11) et dudit sous-système de Système Multimédia à Protocole Internet (10),
- une information de couverture associée à une couverture d'un ou des deux dudit sous-système à commutation de circuits (11) et dudit sous-système de Système Multimédia à Protocole Internet (10),
- une information de disponibilité associée à une disponibilité d'un ou des deux dudit sous-système à commutation de circuits (11) et dudit sous-système de Système Multimédia à Protocole Internet (10),
- une information de type de service associée à un type de service dudit service donné impliquant ledit au moins un terminal mobile (12),
- une information d'utilisation de service associée à un ou plusieurs services étant activement fournis audit au moins un terminal mobile (12),
- une information de connexion associée à une ou plusieurs connexions actives impliquant un ou plusieurs dudit sous-système à commutation de circuits (11), dudit sous-système de Système Multimédia à Protocole Internet (10) et dudit terminal mobile (12),
- une information de capacité de terminal associée à une capacité dudit terminal mobile (12),
- une information de capacité de noeud de sous-système à commutation de circuits associée à une capacité d'un noeud dudit sous-système à commutation de circuits (11), et
- un information de capacité de noeud de sous-système de Système Multimédia à Protocole Internet (10) associée à une capacité d'un noeud dudit sous-système de Système Multimédia à Protocole Internet (10).

3. Entité de décision de routage de service (15) selon la revendication 1 ou 2, dans laquelle ladite première partie est agencée afin d'envoyer une information de joignabilité associée à une joignabilité dudit au moins un terminal mobile (12) dans ledit sous-système à commutation de circuits (11) à ladite seconde partie, et ladite seconde partie est agencée afin de prendre une décision de routage.

4. Entité de décision de routage de service (15) selon une des revendications 1 à 3, dans laquelle au moins une partie de ladite entité de routage de service est contenue dans ledit au moins un terminal mobile (12).

5. Procédé de décision de routage de service pour un système qui comprend un sous-système à commutation de circuits (11), un sous-système de Système Multimédia à Protocole Internet (10) et au moins un terminal mobile (12) approprié à une communication avec ledit sous-système à commutation de circuits (11) et ledit sous-système de Système Multimédia à Protocole Internet (10), ledit sous-système à commutation de circuits (11) fournissant un premier ensemble de services et ledit sous-système de Système Multimédia à Protocole Internet (10) fournissant un second ensemble de services, ledit premier et ledit second ensemble de services se superposant au moins partialement, ledit procédé de décision de routage de service comprenant de :
prendre (S32) une décision de routage de service dans une entité de décision de routage de service (15), ladite décision de routage de service étant associée à un service donné impliquant ledit au moins un terminal mobile (12) en ce qui concerne le routage dudit service donné via un ou les deux dudit sous-système à commutation de circuits (11) et dudit sous-système de Système Multimédia à Protocole Internet (10), sur la base d'une information de décision prédéterminée, ladite entité de décision de routage de service (15) comprenant une première partie dans le sous-système à commutation de circuits (11) et une seconde partie dans le sous-système de Système Multimédia à protocole Internet (10), ladite seconde partie étant agencée afin d'envoyer une information de joignabilité associée à une joignabilité dudit au moins un terminal mobile dans ledit sous-système de Système Multimédia à Protocole Internet (10) à ladite première partie, et ladite première partie étant agencée afin de prendre la décision de routage de manière à obtenir une utilisation efficace des sous-systèmes, dans lequel le procédé de décision de routage de service comprend en outre les étapes consistant à :
déterminer (S43) un dudit sous-système à commutation de circuits (11) et dudit sous-système de Système Multimédia à Protocole Internet (10) comme un sous-système désiré pour ledit service donné,
déterminer (S44) si une ou plusieurs premières conditions prédéterminées associées audit sous-système désiré et à ladite information de décision prédéterminée sont remplies,
décider (S45) de router ledit service donné à travers ledit sous-système désiré si lesdites une ou plusieurs premières conditions prédéterminées sont remplies,
si lesdites une ou plusieurs premières conditions prédéterminées ne sont pas remplies, déterminer (S46) si une ou plusieurs secondes conditions prédéterminées associées à l'autre que ladite sous-système désiré et ladite information de décision prédéterminée sont remplies, et
décider (S47) de router ledit service donné à travers ledit autre que ledit sous-système désiré si lesdites une ou plusieurs secondes conditions prédéterminées sont remplies.

6. Procédé de décision de routage de service selon la revendication 5, dans lequel ladite information de décision comprend une ou plusieurs de :
- une information de joignabilité associée à une joignabilité dudit terminal mobile (12) via un ou les deux dudit sous-système à commutation de circuits (11) et dudit sous-système de Système Multimédia à Protocole Internet (10),
- une information de préférence associée à une préférence réglée par un utilisateur dudit au moins un terminal mobile (12),
- une information de préférence associée à une préférence réglée par un opérateur dudit sous-système à commutation de circuits (11),
- une information de préférence associée à une préférence réglée par un opérateur dudit sous-système de Système Multimédia à Protocole Internet (10),
- une information d'abonnement associée à un abonnement dudit utilisateur dudit au moins un terminal mobile (12),
- une information de temps associée à un moment de la journée,
- une information de charge associée à une charge d'un ou des deux dudit sous-système à commutation de circuits (11) et dudit sous-système de Système Multimédia à Protocole Internet (10),
- une information de couverture associée à une couverture d'un ou des deux dudit sous-système à commutation de circuits (11) et dudit sous-système de Système Multimédia à Protocole Internet (10),
- une information de disponibilité associée à une disponibilité d'un ou des deux dudit sous-système à commutation de circuits (11) et dudit sous-système de Système Multimédia à Protocole Internet (10),
- une information de type de service associée à un type de service dudit service donné impliquant ledit au moins un terminal mobile (12),
- une information d'utilisation de service associée à un ou plusieurs services étant activement fournis audit au moins un terminal mobile (12),
- une information de connexion associée à une ou plusieurs connexions actives impliquant un ou plusieurs dudit sous-système à commutation de circuits (11), dudit sous-système de Système Multimédia à Protocole Internet (10) et dudit terminal mobile (12),
- une information de capacité de terminal associée à une capacité dudit terminal mobile (12),
- une information de capacité de noeud de sous-système à commutation de circuits associée à une capacité d'un noeud dudit sous-système à commutation de circuits (11), et
- un information de capacité de noeud de sous-système de Système Multimédia à Protocole Internet (10) associée à une capacité d'un noeud dudit sous-système de Système Multimédia à Protocole Internet (10).

7. Procédé de décision de routage de service selon les revendications 5 ou 6, comprenant de : rejeter (S48) le routage dudit service donné si lesdites une ou plusieurs secondes conditions prédéterminées ne sont pas remplies.

8. Procédé de décision de routage de service selon les revendications 5 ou 6, comprenant de :
répéter lesdites étapes de détermination en ce qui concerne lesdites premières et secondes conditions prédéterminées jusqu'à ce que une
desdites premières conditions soit remplie, après quoi il est décidé de router ledit service donné à travers ledit sous-système désiré,
lesdites secondes conditions soient remplies, après quoi il est décidé de router ledit service donné à travers ledit sous-système autre que ledit sous-système désiré, et
une condition d'interruption de répétition est remplie, après quoi le routage dudit service donné est rejeté.
